# EUROPEAN PATENT APPLICATION

(11) **EP 2 400 462 A1**
(43) Date of publication of application: **28.12.2011**
(21) Application number: 10743518.2
(22) Date of filing: 08.02.2010
(51) Int. Cl.: G06T 13/00, G06F 13/00

(54) **DEVICE FOR CONTROL OF MOVING SUBJECT, SYSTEM FOR CONTROL OF MOVING SUBJECT, METHOD FOR CONTROL OF MOVING SUBJECT, AND PROGRAM**

(30) Priority: 18.02.2009 JP 2009035422
(71) Applicant: NEC Corporation, Tokyo 108-8001 (JP)
(72) Inventor: FUYUNO, Tetsuya, Tokyo 108-8001 (JP)
(74) Representative: Wenzel & Kalkoff
(86) International application number: PCT/JP2010/000741
(87) International publication number: WO 2010/095388

(57) **Abstract**

A moving-subject control device controls a motion of a moving subject based on motion data indicating the motion of the moving subject, and includes an input unit which receives an input of attribute information indicating an attribute of the moving subject, a generation unit which generates motion data for a user based on the attribute information the input of which is received by the input unit, as motion data for controlling a motion of a moving subject for the user generated based on the attribute information input by the user of the moving-subject control device, and a control unit which varies the motion of the moving subject for the user based on the motion data for the user generated by the generation unit.

## Description

### TECHNICAL FIELD

The present invention relates to a moving-subject control device, a moving-subject control system, a moving-subject control method, and a program, which controls the motion of a moving subject on the basis of motion data indicating the motion of the moving subject.

### BACKGROUND ART

Recently, a service of generating and using an alter-ego avatar as a self-expression method in cyberspace has been used (for example, see Non-patent Document 1). A user can gain a sense of superiority by creating a desired avatar and displaying it to others according to the above-described service. Furthermore, the user can try to communicate with a user having another avatar.
Also, the user can designate a motion of the avatar and thus cause the avatar to express an emotion.

### [Prior Art Document]

### [Non-patent Document]

Non-patent Document 1: "livedoor avatar," [online], Livedoor Co., Ltd., [search on January 22, 2009], Internet <URL:http://avatar.livedoor.com/>

### SUMMARY OF THE INVENTION

### Problem to be Solved by the Invention

However, avatars of the related art are characters having only appearance information. Thus, a motion of the avatar is limited to a motion designated by a user, and is limited to a fixed motion even when the avatar acts spontaneously. Thus, it is not possible to give the user sufficient pleasure or satisfaction.
The present invention has been made in view of the above-described problems. An object of the present invention is to provide a moving-subject control device, a moving-subject control system, a moving-subject control method, and a program that can vary a motion pattern depending on a moving subject (character) and improve an entertainment property for a user.

### Means for Solving the Problem

The present invention has been made to solve the above-described problems. A moving-subject control device according to a first aspect of the present invention controls a motion of a moving subject based on motion data indicating the motion of the moving subject, and includes an input unit which receives an input of attribute information indicating an attribute of the moving subject, a generation unit which generates motion data for a user based on the attribute information the input of which is received by the input unit, as motion data for controlling a motion of a moving subject for the user generated based on the attribute information input by the user of the moving-subject control device, and a control unit which varies the motion of the moving subject for the user based on the motion data for the user generated by the generation unit.

A moving-subject control system according to a second aspect of the present invention includes a moving-subject control device which controls a motion of a moving subject based on motion data indicating the motion of the motion subject, and a server device which retains motion data for controlling the motion of the moving subject. The moving-subject control device includes: an input unit which receives an input of attribute information indicating an attribute of the moving subject; a generation unit which generates motion data for controlling the motion of the moving subject generated based on the attribute information the input of which is received by the input unit; an identification information generation unit which generates motion data identification information unique to the motion data generated by the generation unit; a registration unit which registers the motion data identification information generated by the identification information generation unit in a storage unit; a device-side transmission unit which transmits the motion data generated by the generation unit and the motion data identification information generated by the identification information generation unit to the server device; a device-side reception unit which receives the motion data indicated by the motion data identification information stored in the storage unit from the server device; and a control unit which varies the motion of the moving subject based on the motion data received by the device-side reception unit. The server device includes: a server-side reception unit which receives the motion data and the motion data identification information from the moving-subject control device; a server-side registration unit which associates and registers the received motion data identification information and the received motion data in a server-side storage unit; and a server-side transmission unit which acquires motion data corresponding to the motion data identification information from the server-side storage unit and transmits the motion data to the moving-subject control device.

A moving-subject control method according to a third aspect of the present invention uses a moving-subject control device controlling a motion of a moving subject based on motion data indicating the motion of the motion subject, and includes: receiving an input of attribute information indicating an attribute of the moving subject; generating motion data for a user based on the attribute information of the received input, as motion data for controlling a motion of a moving subject for the user being a moving subject, which is generated based on the attribute information input by the user of the moving-subject control device; and varying the motion of the moving subject for the user based on the generated motion data for the user.

A program according to a fourth aspect of the present invention causes a moving-subject control device which controls a motion of a moving subject based on motion data indicating the motion of the motion subject, to operate as: an input unit which receives an input of attribute information indicating an attribute of the moving subject; a generation unit which generates, based on the attribute information the input of which is received by the input unit, motion data for a user being motion data for controlling a motion of a moving subject for the user indicating a moving subject generated based on the attribute information input by the user of the moving-subject control device; and a control unit which varies the motion of the moving subject for the user based on the motion data for the user generated by the generation unit.

A moving-subject control device according to a fifth aspect of the present invention communicates with another device which retains motion data for controlling a motion of a moving subject, and causes the moving subject to act, and includes: a motion data reception unit which receives the motion data from the other device; and a control unit which varies the motion of the moving subject based on the motion data received by the motion data reception unit.

A program according to a sixth aspect of the present invention causes a moving-subject control device communicating with another device which retains motion data for controlling a motion of a moving subject, and causing the moving subject to act, to operate as: a motion data reception unit which receives the motion data from the other device; and a control unit which varies the motion of the moving subject based on the motion data received by the motion data reception unit.

### Effect of the Invention

According to the present invention, a generation unit of a moving-subject control device generates motion data based on input attribute information and a control unit varies a motion of a moving subject based on the motion data. Thereby, it is possible to generate characters having various entertainment properties because motions of moving subjects having different attribute information can be different.

### BRIEF DESCRIPTION OF THE DRAWINGS

FIG. 1 is a configuration diagram of a character system according to an exemplary embodiment of the present invention.
FIG. 2A is a schematic block diagram showing a configuration of a mobile terminal shown in FIG. 1.
FIG. 2B is a schematic block diagram showing a configuration of a server device shown in FIG. 1.
FIG. 3A is a diagram showing a character table stored in an auxiliary storage unit of the mobile terminal shown in FIG. 1.
FIG. 3B is a diagram showing an intimacy table stored in the auxiliary storage unit of the mobile terminal shown in FIG. 1.
FIG. 4 is a flowchart showing an operation of the mobile terminal shown in FIG. 1.
FIG. 5 is a first flowchart showing a character generation operation by the mobile terminal shown in FIG. 1.
FIG. 6 is a second flowchart showing a character generation operation by the mobile terminal shown in FIG. 1.
FIG. 7 is a first sequence diagram showing an operation of the character system shown in FIG. 1.
FIG. 8 is a second sequence diagram showing an operation of the character system shown in FIG. 1.

### EMBODIMENTS FOR CARRYING OUT THE INVENTION

Hereinafter, exemplary embodiments of the present invention will be described in detail with reference to the drawings.

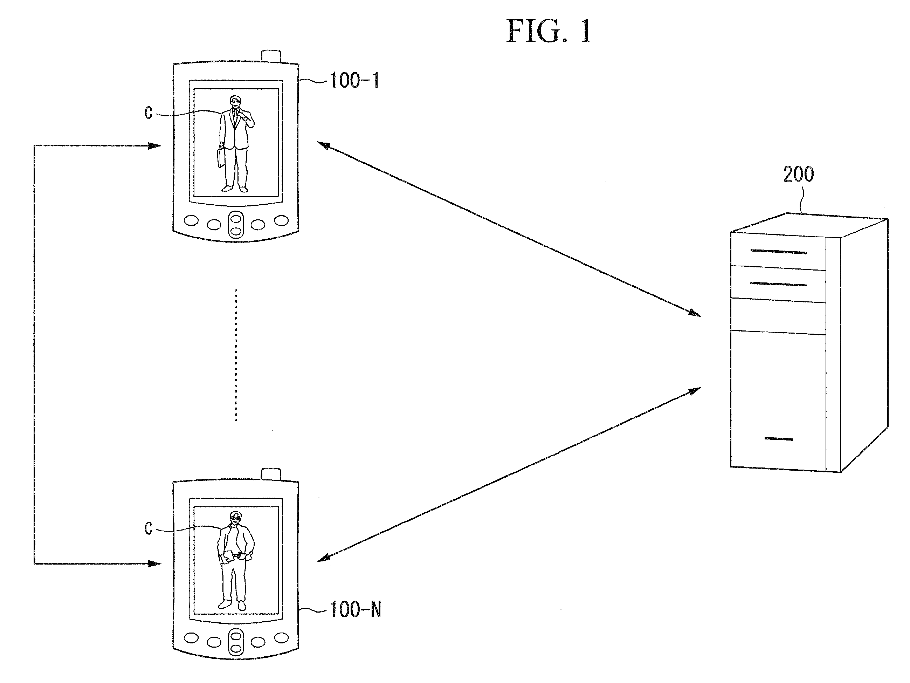

FIG. 1 is a configuration diagram of a character system according to an exemplary embodiment of the present invention.
The character system (moving-subject control system) includes mobile terminals 100-1 to 100-N (moving-subject control devices), and a server device 200. The mobile terminals 100-1 to 100-N and the server device 200 are connected by a network. The mobile terminals 100-1 to 100-N can be connected to each other by the network or near field communication such as infrared communication. One mobile terminal 100-1 will be described below, but the other mobile terminals 100-2 to 100-N also have the same configuration.
The mobile terminal 100-1 displays a character C (moving subject). The character C acts or displays a message on a screen of the mobile terminal 100-1.
The server device 200 stores information (motion data) of the character C and a motion pattern and a message pattern of the character C.

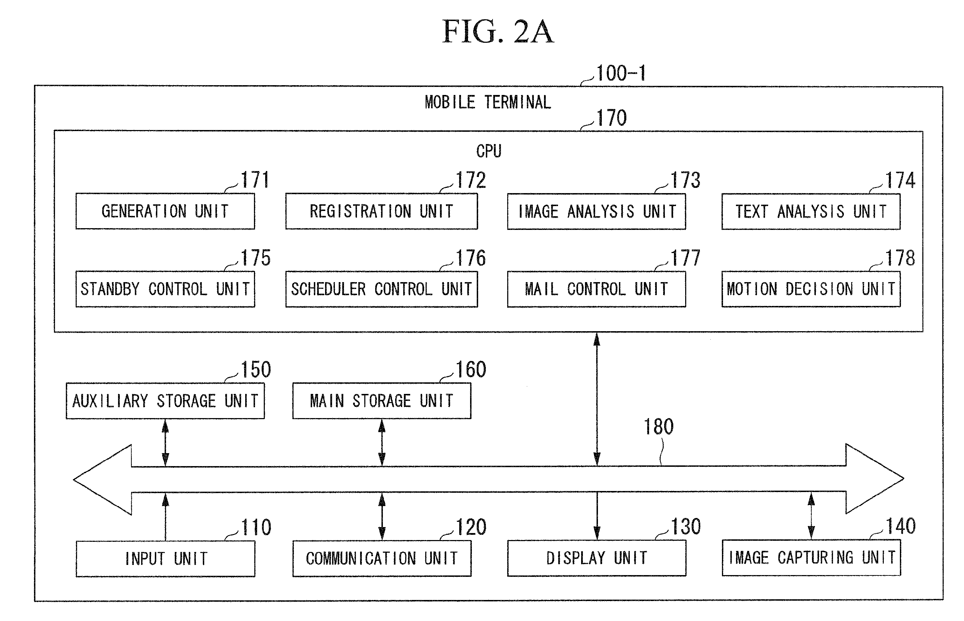

FIG. 2A is a schematic block diagram showing a configuration of the mobile terminal.
The mobile terminal 100-1 includes an input unit 110, a communication unit 120 (an attribute information reception unit, a motion data reception unit, an electronic document reception unit, an electronic document transmission unit, a device-side transmission unit, and a device-side reception unit), a display unit 130 (a standby display unit), an image capturing unit 140, an auxiliary storage unit 150 (a storage unit), a main storage unit 160, and a CPU 170.
The input unit 110 receives an input of information from a user via an input interface such as a numerical keypad.
The communication unit 120 communicates with the other mobile terminals 100-2 to 100-N or the server device 200.
The display unit 130 controls a display of a screen.
The image capturing unit 140 captures an image by a digital camera embedded in the mobile terminal 100-1.
The auxiliary storage unit 150 stores system information and a program of the mobile terminal 100-1. Also, the auxiliary storage unit 150 stores a character table storing characters C and an intimacy table storing intimacies between the characters C.
The main storage unit 160 stores information to be used for an arithmetic operation of the CPU 170.
The CPU 170 executes a program and controls the operation of the mobile terminal 100-1.
A bus 180 is a transmission path through which data is transmitted to each processing unit at the inside of the mobile terminal 100-1.

If the program stored in the auxiliary storage unit 150 is executed, the CPU 170 operates as a generation unit 171 (a generation unit and an identification information generation unit), a registration unit 172 (a registration unit), an image analysis unit 173, a text analysis unit 174 (an electronic document analysis unit), a standby control unit 175 (a standby display unit), a scheduler control unit 176 (a schedule registration unit), a mail control unit 177 (an electronic mail transmission unit), and a motion decision unit 178 (a control unit, an emotion decision unit, an intimacy decision unit, and a document generation unit).
The generation unit 171 generates the character C on the basis of the information input by the user.
The registration unit 172 registers the character C in the auxiliary storage unit 150.
The image analysis unit 173 analyzes the image captured by the image capturing unit 140 and generates a portrait image.
The text analysis unit 174 analyzes the content of an electronic document.
The standby control unit 175 controls settings and display of a standby screen.
The scheduler control unit 176 controls a scheduler to register and display a schedule.
The mail control unit 177 controls an electronic mail to be generated, transmitted/received, and displayed.
The motion decision unit 178 determines a motion and message of the character C.

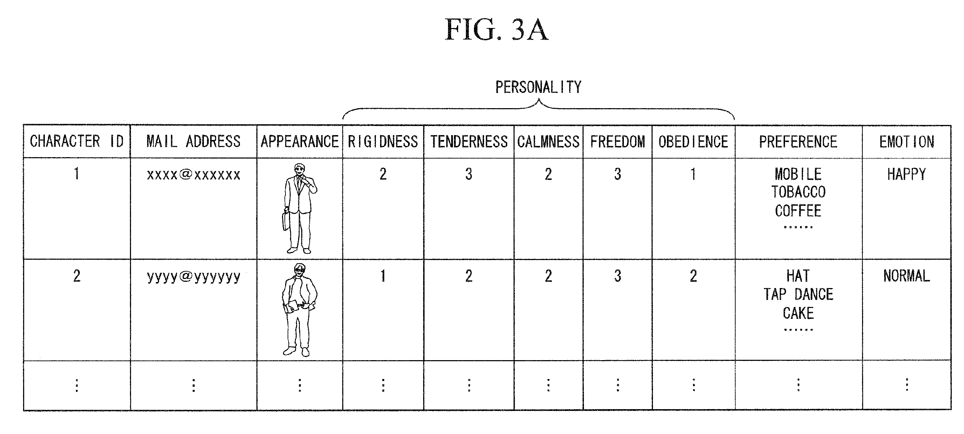

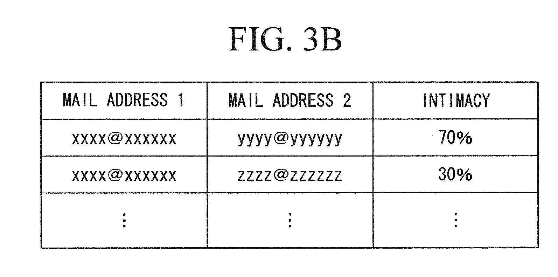

FIGS. 3A and 3B are diagrams showing tables stored in the auxiliary storage unit.
FIG. 3A shows a character table.
The character table stored in the auxiliary storage unit 150 stores a character ID (motion data identification information) for identifying a character C, a mail address of a mobile terminal which has generated the character C, an appearance of the character C, a personality (attribute) of the character C, a preference (attribute) of the character C, and an emotion of the character C.
FIG. 3A shows an example in which a personality is expressed by five parameter values of rigidness, tenderness, calmness, freedom, and obedience. This expression method is one example, and the content and number of parameters are not limited thereto. The expression of the personality is also not limited to the expression by the parameters, and, for example, the personality may be expressed by classifying the personality into a predetermined type.
The preference may be expressed by a list of keywords.
FIG. 3B shows an intimacy table.
The intimacy table stored in the auxiliary storage unit 150 stores two mail addresses and intimacies.

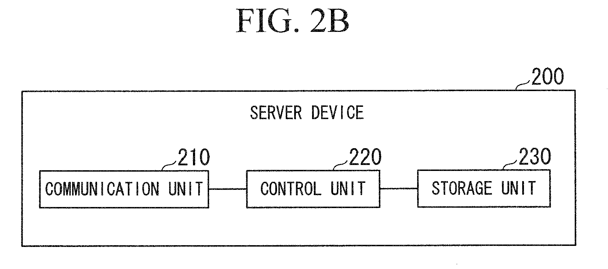

FIG. 2B is a schematic block diagram showing a configuration of the server device 200.
The server device 200 includes a communication unit 210 (a server-side reception unit and a server-side transmission unit), a control unit 220 (a server-side registration unit), and a storage unit 230 (a server-side storage unit and a motion pattern storage unit).
The communication unit 210 communicates with the mobile terminals 100-1 to 100-N.
The control unit 220 controls the server device 200.
The storage unit 230 stores a character table storing characters C, an intimacy table storing intimacies between the characters C, a motion table storing motion patterns of the characters C, a message table storing message patterns of the characters C, a recommendation table storing recommendation patterns of the characters C, and a mail table storing content patterns of electronic mails.

The character table and the intimacy table have the same configurations as those stored in the mobile terminal 100-1.
The motion table stores personalities, motion patterns, and occurrence probabilities of the characters C associated with each other. For example, an occurrence probability of a motion "lie" is set to be high for a personality having a large parameter value of "freedom," and an occurrence probability of a motion "anger" is set to be high for a personality having a large parameter value of "rigidness."
The message table stores personalities and message patterns of the characters C associated with each other.
The recommendation table stores keywords such as preferences and recommendation patterns of the characters C associated with each other.
The mail table stores personalities, keywords, and mail content patterns of the characters C associated with each other.

In the mobile terminal 100-1, the input unit 110 receives an input of attribute information indicating attributes of the characters C. The generation unit 171 of the CPU 170 generates the characters C on the basis of the attribute information. The characters C generated by the registration unit 172 are registered in the auxiliary storage unit 150. The motion decision unit 178 varies a motion of a character C stored in the auxiliary storage unit 150 in correspondence with the attribute information.
Thereby, the mobile terminal 100-1 can cause the character C to make a different motion.

Next, an operation of the mobile terminal 100-1 will be described.
An example in which the character C is set to the standby screen of the mobile terminal 100-1 will be described.

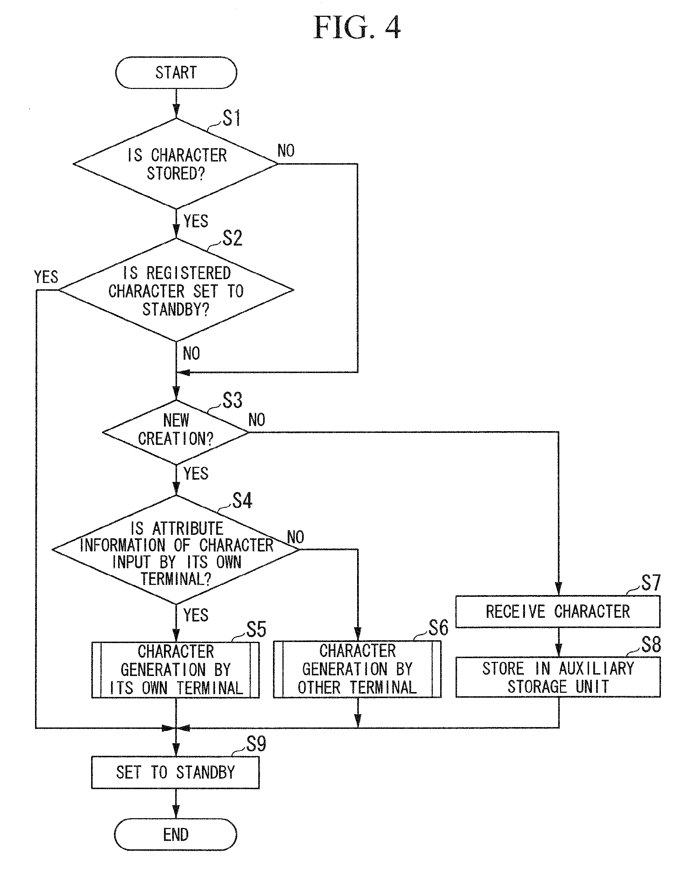

FIG. 4 is a flowchart showing the operation of the mobile terminal.
First, if the user inputs information indicating that a character C is set to the standby screen from a setting screen of the mobile terminal 100-1, the standby control unit 175 of the CPU 170 determines whether or not the auxiliary storage unit 150 stores the character C (step S1). If the standby control unit 175 determines that the auxiliary storage unit 150 stores the character C (step S1: YES), the input unit 110 receives an input of information for selecting whether or not to set the character C stored in the auxiliary storage unit 150 to the standby screen (step S2).

The case when the standby control unit 175 determines that the auxiliary storage unit 150 does not store the character C in step S 1 (step S1: NO) or the case when the standby control unit 175 receives information indicating that a character C, which is not stored in the auxiliary storage unit 150, in step S2, is set to the standby screen (step S2: NO) will be described. In this case, the generation unit 171 receives an input of information for selecting whether to newly create a character C via the input unit 110 or whether to receive a character C from the other mobile terminals 100-2 to 100-N or the server device 200 (step S3). The case when a character C of a personage published by the server device 200 is received, or the like, is included as the case when the character C is received from the server device 200.

If information indicating that the character C is newly created is received (step S3: YES), the generation unit 171 receives an input of information for selecting whether attribute information indicating a personality, a preference, or the like of the character C is input by its own terminal (the mobile terminal 100-1) or the other mobile terminals 100-2 to 100-N via the input unit 110 (step S4). As the case when the attribute information is input by the other mobile terminals 100-2 to 100-N, for example, there is the case when the other mobile terminals 100-2 to 100-N do not correspond to a character system, or the like.

If the generation unit 171 receives information indicating that the attribute information is input by its own terminal (step S4: YES), the mobile terminal 100-1 receives the input of the attribute information and generates a character C (step S5). Details of this process will be described later.
On the other hand, if the standby screen control unit 175 receives information indicating that the attribute information is input by the other mobile terminals 100-2 to 100-N (step S4: NO), the mobile terminal 100-1 receives the attribute information from the other mobile terminals 100-2 to 100-N and generates a character C (step S6). Details of this process will be described later.

If the generation unit 171 receives information indicating that the character C is received from outside in step S3 (step S3: NO), the communication unit 120 receives the character C from the other mobile terminals 100-2 to 100-N or the server device 200 (step S7). If the communication unit 120 receives the character C, the registration unit 172 stores the character C in the auxiliary storage unit 150 (step S8).

The case where the standby control unit 175 receives information indicating that the character C, which is not stored in the auxiliary storage unit 150, in step S2 is set to the standby screen (step S2: NO), the case when the character C is generated by receiving the input of the attribute information in step S5, the case when the character C is generated by receiving the input of the attribute information in step S6, or the case when the character C is stored in the auxiliary storage unit 150 in step S8 will be described. In this case, the standby control unit 175 sets the corresponding character C to the standby screen (step S9).

If the character C is set to the standby screen, the standby control unit 175 causes the character C and the program to reside in the main storage unit 160. When the standby screen is displayed, the display unit 130 reads the character C and the program from the main storage unit 160 and displays the character C on the standby screen.

Next, a process of inputting attribute information by its own terminal and generating a character C in step S5 described above will be described.

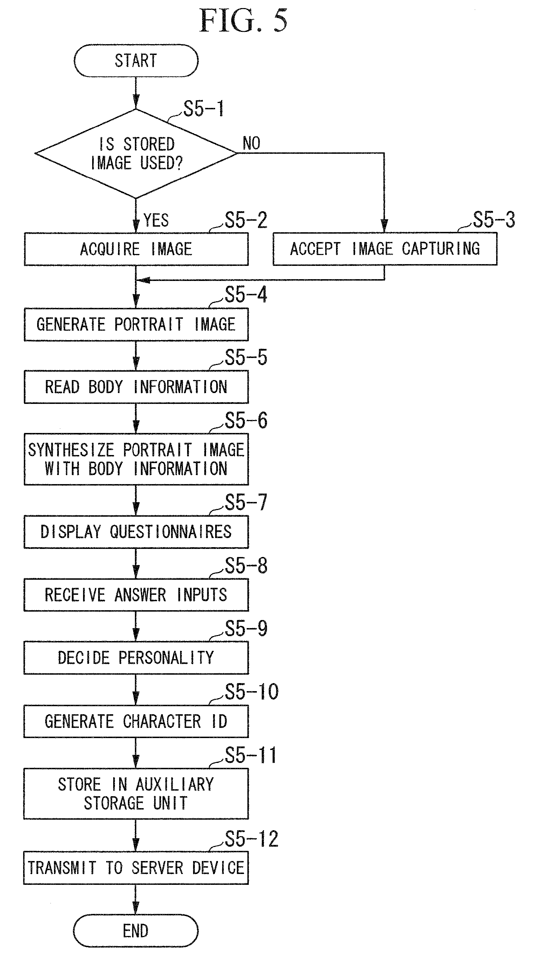

FIG. 5 is a first flowchart showing a character generation operation by a mobile terminal.
If the generation unit 171 receives information indicating that attribute information is input by its own terminal in step S4 described above, the generation unit 171 receives an input of information indicating whether or not a face of the character C is generated from an image stored by the auxiliary storage unit 150 via the input unit 110 (step S5-1).

If the generation unit 171 receives the input of the information indicating that the face of the character C is generated from the image stored in the auxiliary storage unit 150 (step S5-1: YES), the generation unit 171 acquires the corresponding image from the auxiliary storage unit 150 (step S5-2).
On the other hand, if the generation unit 171 receives the input of the information indicating that the face of the character C is generated from an image, which is not stored in the auxiliary storage unit 150 (step S5-1: NO), the image capturing unit 140 accepts image capturing and the generation unit 171 acquires a captured image (step S5-3).

If the generation unit 171 acquires the image in step S5-2 or S5-3, the image analysis unit 173 analyzes the acquired image and generates a portrait image (step S5-4). For example, the portrait image is generated as follows.
First, the image analysis unit 173 extracts an area from the image in which hue, brightness, and luminance values are within a predetermined range in comparison with hue, brightness, and luminance values of a skin color. The image analysis unit 173 extracts an area having a substantially oval shape as a face area from the extracted area. Next, the image analysis unit 173 selects a color in contact with an upper part of the face area. Next, the image analysis unit 173 extracts, as a hair area, an area from the image in which the hue, brightness, and luminance values are within a predetermined range in comparison with the hue, brightness, and luminance values of a selected color, and which is in contact with the information of the face area. Next, the image analysis unit 173 extracts contours of the face area and the hair area, and extracts parts of contours of eyebrows, eyes, a nose, a mouth, a face, and the like. Next, the image analysis unit 173 extracts portrait parts similar to parts extracted from among portrait parts pre-stored in the auxiliary storage unit 150 and arranges the portrait parts in corresponding coordinates. A portrait image can be generated by a technique as described above, but is not limited thereto, and other techniques may be used.

If the image analysis unit 173 generates the portrait image in step S5-4, the generation unit 171 reads body information pre-stored in the auxiliary storage unit 150 (step S5-5). The body information is a group of images indicating bodies of a character C, and, for example, expressed by an associative array or the like in which a motion pattern such as "run," "sit," or the like and an image of a body corresponding to the motion pattern are stored associated with each other. The image may be a moving image as well as a still image. If the body information is read, the generation unit 171 synthesizes a portrait image of the character C with a face part of the read body information and generates appearance information regarding the character C (step S5-6).

If the appearance information of the character C is generated, the generation unit 171 acquires questionnaires pre-stored in the auxiliary storage unit 150 and displays them on the display unit 130 (step S5-7). According to the questionnaires, the generation unit 171 collects information to be used to determine a personality and a preference of a user. Questionnaires to be used for the personality determination are, for example, "Are you punctual?", "Are you curious?", and the like. Questionnaires to be used for the preference determination are, for example, "What is your favorite music?", "What is your favorite food?", and the like.
If the display unit 130 displays the questionnaires, the generation unit 171 receives inputs of answers to the questionnaires via the input unit 110 (step S5-8).

If the answer inputs are received, the generation unit 171 decides the personality of the character C on the basis of the answers (step S5-9). The personality is expressed, for example, by five parameter values of rigidness, tenderness, calmness, freedom, and obedience. For the personality decision, for example, the parameters and the questionnaire can be pre-associated, and the parameters can be calculated on the basis of whether the answers to the questionnaire associated with the parameters are positive or negative.

If the personality of the character C is decided, the generation unit 171 generates a character ID for identifying the character C (step S5-10). If the generation unit 171 generates the character ID, the registration unit 172 stores appearance information, information indicating the personality, and information indicating the preference in association with the character ID and a mail address of its own terminal as the character C in the character table of the auxiliary storage unit 150 (step S5-11).
If the registration unit 172 stores the character C in the auxiliary storage unit 150, the communication unit 120 transmits the character ID, the mail address of its own terminal, and the character C to the server device 200 (step S5-12).
Thereby, the mobile terminal 100-1 can generate the character C and store the character C in the auxiliary storage unit 150 and the server device 200.

Next, a process of inputting attribute information by the other mobile terminals 100-2 to 100-N and generating a character C by its own terminal in step S6 described above will be described.

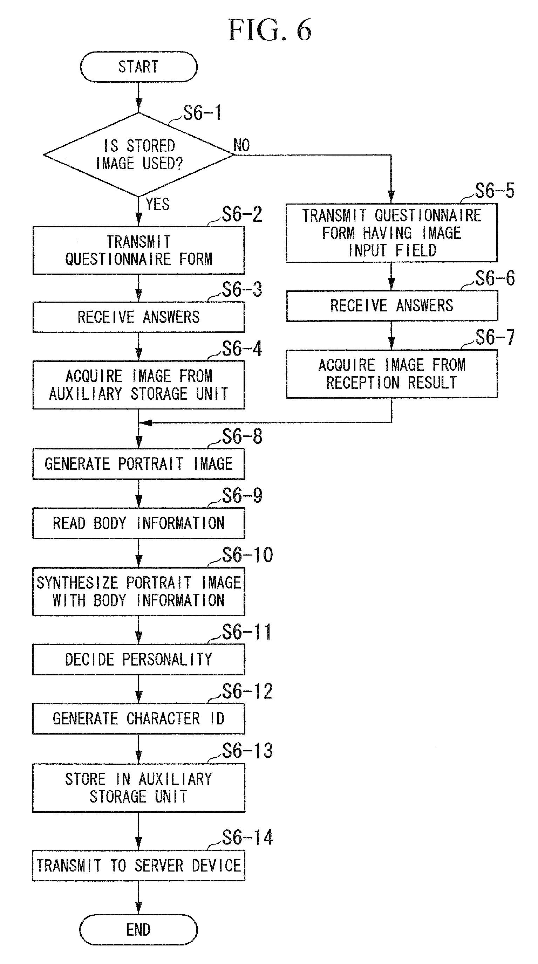

FIG. 6 is a second flowchart showing a character generation operation by a mobile terminal.
If the generation unit 171 receives information indicating that the attribute information is input by the other mobile terminals 100-2 to 100-N in step S4 described above, the generation unit 171 receives an input of information indicating whether or not a face of the character C is generated from an image stored in the auxiliary storage unit 150 via the input unit 110 (step S6-1).

If the input of the information indicating that the face of the character C is generated from the image stored in the auxiliary storage unit 150 is received (step S6-1: YES), the generation unit 171 generates a questionnaire form from questionnaires stored in the auxiliary storage unit 150 and transmits the questionnaire form to the other mobile terminals 100-2 to 100-N via the communication unit 120 (step S6-2). If the other mobile terminals 100-2 to 100-N receive the questionnaire form and transmit answers to the questionnaires, the communication unit 120 receives the answers from the other mobile terminals 100-2 to 100-N (step S6-3). If the communication unit 120 receives the answers, the generation unit 171 acquires an image to be used to generate the face of the character C from the auxiliary storage unit 150 (step S6-4).
On the other hand, if an input of information indicating that the face of the character C is not generated from an image stored in the auxiliary storage unit 150 is received (step S6-1: NO), the generation unit 171 generates a questionnaire form having an image input field from questionnaires stored in the auxiliary storage unit 150 and transmits the questionnaire form to the other mobile terminals 100-2 to 100-N via the communication unit 120 (step S6-5). If the other mobile terminals 100-2 to 100-N receive the questionnaire form and transmit answers to the questionnaires and images, the communication unit 120 receives the answers and the images from the other mobile terminals 100-2 to 100-N (step S6-6). If the communication unit 120 receives the answers, the generation unit 171 acquires the images from results received by the communication unit 120 (step S6-7).

If the generation unit 171 acquires the images in step S6-4 or step S6-7, the image analysis unit 173 analyzes the acquired images and generates a portrait image (step S6-8). If the image analysis unit 173 generates the portrait image, the generation unit 171 reads body information pre-stored in the auxiliary storage unit 150 (step S6-9). Next, the generation unit 171 synthesizes the portrait image of the character C with a face part of the read body information and generates appearance information of the character C (step S6-10).

If the appearance information of the character C is generated, the generation unit 171 decides the personality of the character C on the basis of the answers received by the communication unit 120 (step S6-11).
If the personality of the character C is decided, the generation unit 171 generates a character ID of the character C (step S6-12). If the generation unit 171 generates the character ID, the registration unit 172 stores the portrait image, information indicating the personality, and information indicating the preference in association with the character ID and a mail address of the other mobile terminals 100-2 to 100-N as the character C in the character table of the auxiliary storage unit 150 (step S6-13).
If the registration unit 172 stores the character C in the auxiliary storage unit 150, the communication unit 120 transmits the character ID, the mail address of the other mobile terminals 100-2 to 100-N, and the character C to the server device 200 (step S6-14).
Thereby, the mobile terminal 100-1 can generate the character C and store the character C in the auxiliary storage unit 150 and the server device 200.

Next, an operation of the mobile terminal 100-1 in which the character C is set to the standby screen will be described.

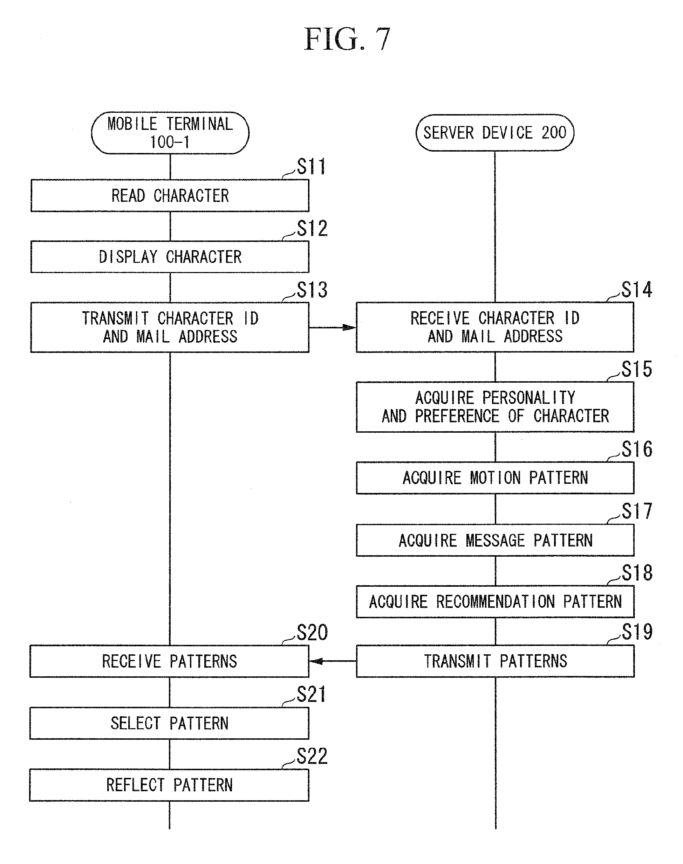

FIG. 7 is a first sequence diagram showing an operation of the character system.
First, if the mobile terminal 100-1 is started by the user applying power of the mobile terminal 100-1, the standby control unit 175 reads a character C set to the standby screen from the auxiliary storage unit 150 (step S11). Next, the standby control unit 175 causes the display unit 130 to display an image of a normal state from appearance information of the character C (step S12).

If the display unit 130 displays the character C, the motion decision unit 178 transmits a character ID and a mail address of the mobile terminal 100-1 to 100-N creating the character C to the server device 200 (step S13).

If the mobile terminal 100-1 transmits the character ID and the mail address to the server device 200, the communication unit 210 of the server device 200 receives the character ID and the mail address (step S 14). If the communication unit 210 of the server device 200 receives the character ID and the mail address, the control unit 220 of the server device 200 acquires a personality and a preference of the character C stored in association with the character ID and the mail address from the character table of the storage unit 230 of the server device 200 (step S 15). If the personality of the character C is acquired, the control unit 220 of the server device 200 acquires a plurality of motion patterns stored in association with the acquired personality from the motion table of the storage unit 230 of the server device 200 (step S16). Also, the control unit 220 of the server device 200 acquires a plurality of message patterns stored in association with the acquired personality from the message table (step S 17). Also, the control unit 220 of the server device 200 acquires, from the recommendation table, a plurality of recommendation patterns stored in association with keywords having a high similarity with the acquired preference (step S 18).
If the control unit 220 of the server device 200 acquires the motion patterns, the message patterns, and the recommendation patterns, the communication unit 210 of the server device 200 transmits them to the mobile terminal 100-1 (step S19).

If the server device 200 transmits the motion patterns, the message patterns, and the recommendation patterns, the communication unit 120 of the mobile terminal 100-1 receives them (step S20). If the communication unit 120 receives the respective patterns, the motion decision unit 178 randomly selects one of the received patterns (step S21) and the selected pattern is reflected in the character C displayed by the display unit 130 (step S22). For example, if the motion decision unit 178 selects the motion pattern, the display unit 130 displays an image corresponding to the motion pattern selected from the appearance information of the character C. If the motion decision unit 178 selects the message pattern or the recommendation pattern, the display unit 130 displays a speech balloon storing a letter string indicated by the selected message pattern or recommendation pattern above the character C.
Thereby, the mobile terminal 100-1 causes the character C to make a motion consistent with the personality and preference, a message, and a recommendation.

At this time, a character C other than the character C set to standby may be simultaneously displayed, a message pattern may be received on the basis of an intimacy between two characters C from the server device 200, and a conversation may be made.

Next, an operation in the case when an electronic mail (electronic document) is received when the mobile terminal 100-1 sets a character C to standby will be described.

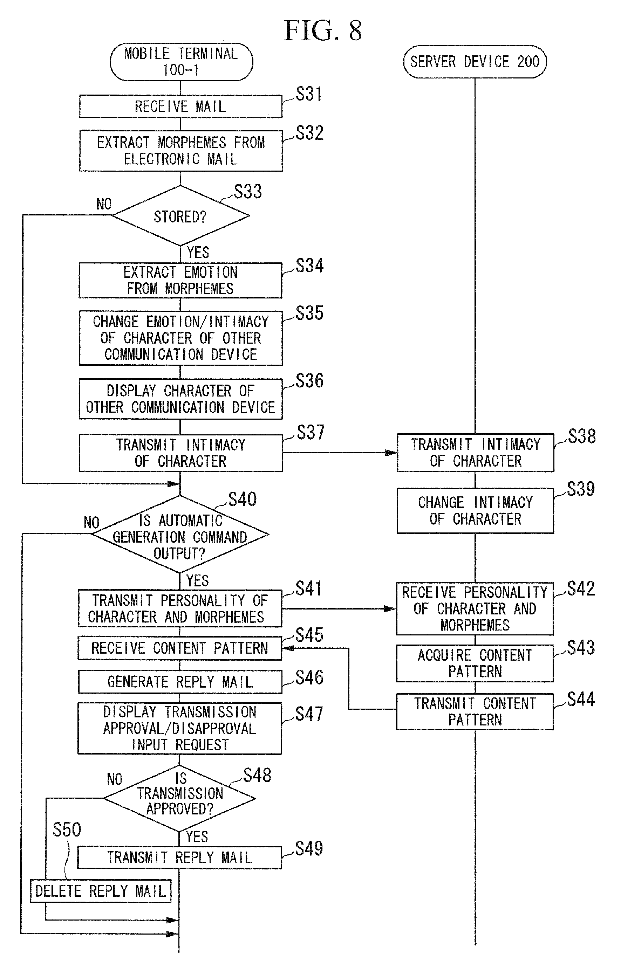

FIG. 8 is a second sequence diagram showing an operation of the character system.
In the state when the character C is set to standby, when the mail control unit 177 receives an electronic mail from the other communication device 100-2 via the communication unit 120 (step S31) and then the text analysis unit 174 analyzes text of the received electronic mail and extracts morphemes (step S32). If the text analysis unit 174 extracts the morphemes of the electronic mail, the mail control unit 177 determines whether or not the auxiliary storage unit 150 stores the same mail address as that of the other communication device 100-2 in association with the character C in the character table (step S33).

If the mail control unit 177 determines that the mail address of the other communication device 100-2 is stored (step S33: YES), the text analysis unit 174 extracts an emotion from the extracted morphemes (step S34). The emotion extraction may be performed, for example, by pre-associating and -storing morphemes and emotions in the auxiliary storage unit 150 and acquiring all emotions corresponding to the extracted morphemes. For example, the auxiliary storage unit 150 associates and stores an emotion "happy" with morphemes of "amusement park," and associates and stores an emotion "anger" with morphemes of "angry."

If the text analysis unit 174 extracts the emotion, the motion decision unit 178 changes the emotion of the character C of the other communication device 100-2 stored in the character table of the auxiliary storage unit 150 to the extracted emotion. Moreover, on the basis of the extracted emotion, the intimacy between the character C of its own terminal and the character C of the other communication device 100-2 is changed (step S35). The intimacy change may be performed, for example, by incrementing an intimacy value on the basis of an emotional level when the text analysis unit 174 extracts a positive emotion such as "happy" or "joyful" and decrementing an intimacy value on the basis of an emotional level when the text analysis unit 174 extracts a negative emotion such as "sad" or "angry."

If the motion decision unit 178 changes the emotion and the intimacy of the character C of the other communication device 100-2, the display unit 130 displays an image corresponding to an emotion extracted from appearance information of the character C (step S36). The above-described image may be a moving image as well as a still image.

If the display unit 130 displays the character C, the communication unit 120 transmits the mail address of its own terminal, the mail address of the other communication terminal 100-2, and the intimacy after the change to the server device 200 (step S37).
If the mobile terminal 100-1 transmits the mail address of its own terminal, the mail address of the other communication terminal 100-2, and the intimacy after the change, the communication unit 210 of the server device 200 receives them (step S38). If the communication unit 210 of the server device 200 receives the mail address of its own terminal, the mail address of the other communication terminal 100-2, and the intimacy after the change, an intimacy value stored in association with the mail address of its own terminal and the mail address of the other communication device 100-2 in the intimacy table of the storage unit 230 is changed to the received intimacy (step S39).

The case when the mail control unit 177 determines that the mail address of the other communication device 100-2 is not stored in step S33 (step S33: NO) or the case when the communication unit 120 transmits the intimacy in step S37 will be described. In this case, the mail control unit 177 randomly outputs an automatic generation command to the motion decision unit 178 (step S40). Here, the term "randomly" means that the mail control unit 177 does not necessarily output the automatic generation command every time.
If the motion decision unit 178 outputs the automatic generation command (step S40: YES), the motion decision unit 178 transmits extracted morphemes and a personality of a character C to the server device 200 via the communication unit 120 (step S41).

If the mobile terminal 100-1 transmits the morphemes and the personality, the communication unit 210 of the server 200 receives them (step S42). If the mobile terminal 100-1 receives the morphemes and the personality, the control unit 220 of the server device 200 acquires a content pattern of a mail registered in association with the received morphemes and personality from the mail table of the storage unit 230 of the server device 200 (step S43). If the control unit 220 of the server device 200 acquires the content pattern, the communication unit 210 of the server device 200 transmits the acquired content pattern to the mobile terminal 100-1 (step S44).

If the server device 200 transmits the content pattern, the communication unit 120 of the mobile terminal 100-1 receives the content pattern (step S45). If the communication unit 120 receives the content pattern from the server device 200, the motion decision unit 178 generates the content of an electronic mail on the basis of the received content pattern. That is, the motion decision unit 178 generates a reply mail reflecting the personality of the character C and text of the received electronic mail (step S46). If the reply mail is generated, the motion decision unit 178 displays a speech balloon storing a letter string indicating that an input of a transmission approval/disapproval of the reply mail above the character C displayed by the display unit 130 (step S47) and the input unit 110 receives the input of the transmission approval/disapproval of the reply mail (step S48).

If the input unit 110 receives information indicating that the reply mail is transmitted by a select button of the mobile terminal 100-1 pressed by the user, or the like (step S48: YES), the mail control unit 177 transmits the reply mail generated by the motion decision unit 178 (step S49).
If the input unit 110 receives information indicating that no reply mail is transmitted by a cancel button of the mobile terminal 100-1 pressed by the user, or the like (step S48: NO), the mail control unit 177 deletes the reply mail generated by the motion decision unit 178 (step S50).
Thereby, the mobile terminal 100-1 causes the character C to generate a reply mail consistent with the personality and the received electronic mail. The case when a transmission source of the electronic mail is the communication terminal 100-2 in the above-described example has been described. However, it is not limited thereto, and the same operation is performed when the other communication terminals 100-3 to 100-N are the transmission source of the electronic mail.

Next, an operation when a character C is registered in association with a scheduler of the mobile terminal 100-1 will be described.
First, the scheduler control unit 176 receives inputs of a schedule and a character C to be associated with the schedule via the input unit 110. If the input unit 110 receives the inputs of the schedule and the character C, the registration unit 172 associates the schedule and the character C and registers them in the auxiliary storage unit 150. If the registration unit 172 registers the schedule and the character C, the motion decision unit 178 transmits a preference of the character C registered in association with the schedule and content of the schedule to the server device 200 via the communication unit 120.

If the communication unit 210 of the server device 200 receives the preference and the schedule content from the mobile terminal 100-1, the control unit 220 of the server device 200 acquires a recommendation pattern registered in association with a keyword having the highest similarity to the preference and the schedule content received from the recommendation table of the storage unit 230 of the server device 200. If the control unit 220 of the server device 200 acquires the recommendation pattern, the communication unit 210 of the server device 200 transmits the acquired recommendation pattern to the mobile terminal 100-1.

If the communication unit 120 of the mobile terminal 100-1 receives the recommendation pattern from the server device 200, the motion decision unit 178 causes the display unit 130 to display a speech balloon storing a letter string indicated by the received recommendation pattern above the character C.
Thereby, the mobile terminal 100-1 causes the character C to make a recommendation consistent with the preference and the schedule. For example, it is possible to recommend a present consistent with the preference of a user of the mobile terminal 100-2 by associating and registering the character C received from the mobile terminal 100-2 with a schedule of a birthday of the user of the mobile terminal 100-2.

Next, an operation when the mobile terminal 100-1 transmits a message to the other mobile terminal 100-2 via a character C will be described.
First, if the user inputs information indicating that the message is transmitted to the mobile terminal 100-2 via the character C of the mobile terminal 100-1, the input unit 110 receives an input of selection of the character C, which carries the message to be transmitted to the mobile terminal 100-2. Here, it is preferable that a selectable character C be limited to a character generated only by its own terminal because the character C, which carries the message, is an agent of the user.

If the input of the selection of the character C is received, the input unit 110 receives inputs of a motion pattern of the character C and a message to be transmitted. The input of the message is not essential.
If the input unit 110 receives the inputs of the motion pattern and the message, the communication unit 120 transmits a character ID, the motion pattern, and the message of the selected character C to the mobile terminal 100-2.

If the mobile terminal 100-1 transmits the character ID, the motion pattern, and the message, the communication unit 120 of the mobile terminal 100-2 receives them.
If the communication unit 120 receives the character ID, the motion pattern, and the message, the motion decision unit 178 reads the character C associated with the received character ID from the auxiliary storage unit 150. Next, the motion decision unit 178 causes the display unit 130 to display an image of the received motion pattern from appearance information of the character C and display a speech balloon storing the received message above the character C.
According to the character system as described above, the mobile terminal 100-1 transmits a motion of the character C to the mobile terminal 100-2 in addition to a message of a letter string, so that a more emotional message can be transmitted to the user of the mobile terminal 100-2.

On the other hand, if the mobile terminal 100-1 transmits the character ID, the motion pattern, and the message, it changes the intimacy between the selected character C and the character C of the mobile terminal 100-2 on the basis of the motion pattern and the message, and transmits an intimacy between characters C to the server device 200 to thereby cause a value of the intimacy stored in the storage unit 230 of the server device 200 to be updated.
The case when a transmission destination of an electronic mail is the communication terminal 100-2 has been described in the above-described example. However, it is not limited thereto, and the same operation is performed when the other communication terminals 100-3 to 100-N are the transmission destination of the electronic mail.

The mobile terminal 100-1 can browse all characters C stored in the character table of the auxiliary storage unit 150 according to a function of a phone book, a data folder, or the like. At this time, for example, the mobile terminal 100-1 can display intimacies between characters C by arranging characters C having high intimacies to be close to each other and arranging characters C having low intimacies to be far away from each other.
In the data folder function, it is possible to sort and register the character C into a category such as friends or family.

According to this exemplary embodiment as described above, the mobile terminal 100-1 can decide a motion, a message, and a recommendation of a character C on the basis of a personality and a preference by setting the character C to the standby screen. Thereby, the mobile terminal 100-1 can cause a different motion to be made by the character C.

Although the exemplary embodiments of the present invention have been described above with reference to the drawings, specific configurations are not limited to the above-described exemplary embodiments. Various design changes and the like are possible within the scope without departing from the scope of the present invention.
For example, although the case when the mobile terminal 100-1 receives a plurality of motion patterns, message patterns, recommendation patterns, and mail content patterns corresponding to a personality or preference of a character C from the server device 200 and randomly selects a motion of the character C therefrom when the motion decision unit 178 determines the motion of the character C has been described in this exemplary embodiment, it is not limited thereto. For example, the control unit 220 of the server device 200 may randomly select one pattern and transmit the selected pattern to the mobile terminal 100-1, and the motion decision unit 178 may cause the display unit 130 to display a motion of the received pattern.

Although the case when the storage unit 230 of the server device 200 stores a message table, a recommendation table, and a mail table, and a message, a recommendation, and mail content of a character C are decided from a pattern of a fixed phrase stored in the tables has been described in this exemplary embodiment, it is not limited thereto. For example, a program like a chatterbot system may be stored in the mobile terminal 100-1 or the server device 200, and the message, the recommendation, and the mail content may be decided by the program.

Although the case when the character system includes the server device 200 and the storage unit 230 of the server device 200 stores the motion table, the message table, the recommendation table, and the mail table has been described in this exemplary embodiment, it is not limited thereto. For example, it may be configured such that the auxiliary storage unit 150 of the mobile terminals 100-1 to 100-N stores the motion table, the message table, the recommendation table and the mail table and thus the server 200 does not store them.

Although the case when a personality, a hobby, and a preference of a character C are decided by an initial input has been described in this exemplary embodiment, it is not limited thereto. For example, the personality, the hobby, and the preference may be changed on the basis of a usage history of an electronic mail or the Internet. At this time, a character C of its own terminal can be set to the latest state even in other mobile terminals by transmitting a changed personality, hobby, and preference to the server device 200 and updating a personality, a hobby, and a preference stored in the storage unit 230 of the server device 200.

Although the case when a human character is input as a character C has been described in this exemplary embodiment, it is not limited thereto. For example, an animal may be registered as the character C.

Although the case when a character C is newly generated when the character C is set to the standby screen has been described in this exemplary embodiment, it is not limited thereto. For example, the character C may be generated when a mobile terminal is purchased.

Although the case when an intimacy between characters C is changed by exchanging a mail and a message has been described in this exemplary embodiment, the present invention is not limited thereto. For example, the intimacy of a character C registered in a number of schedules may be raised.

Although the case when a device displaying a character C is a mobile terminal has been described in this exemplary embodiment, it is not limited thereto. The character C may be displayed on a personal computer or a dedicated terminal of this character system.
Although the case when the mobile terminals 100-1 to 100-N display characters C on the display units 130 has been described in this exemplary embodiment, it is not limited thereto. For example, the moving-subject control device according to the present invention may be embedded in a stuffed toy having a built-in robot or the like and the motion decision unit 178 may control the motion of the robot, thereby causing a main body of the soft toy to act.

Although the case when mail addresses are used as information for specifying the mobile terminals 100-1 to 100-N has been described in this exemplary embodiment, it is not limited thereto. For example, individual identification numbers of the mobile terminals 100-1 to 100-N or international mobile subscriber identity (IMSI) numbers of subscriber identity module (SIM) cards mounted on the mobile terminals 100-1 to 100-N may be used. In particular, in the case of an IMSI number being used, when a user changes a mobile terminal, the same character C as before the change can be continuously used even after the change of the mobile terminal by continuously employing a SIM card used in the mobile terminal before the change for use in the mobile terminal after the change.

Although the case when the mobile terminals 100-1 to 100-N include the image analysis units 173 and portrait images are generated in the mobile terminals 100-1 to 100-N has been described in this exemplary embodiment, it is not limited thereto. For example, the server device 200 may include an image analysis unit and a portrait image may be generated in the server device 200. In this case, if the mobile terminals 100-1 to 100-N acquire images in step S6-7 described above, the communication units 120 transmit the acquired images to the server device 200 and an image analysis unit of the server device 200 generates portrait images from the images received from the mobile terminals 100-1 to 100-N. If the image analysis unit generates the portrait images, the server device 200 transmits the generated portrait images to the mobile terminals 100-1 to 100-N. Thereby, the mobile terminals 100-1 to 100-N can acquire the portrait images.

Although the case when the mobile terminal 100-1 generates a questionnaire form when a process of generating a character C in step S5 described above is performed, and the mobile terminal 100-1 decides a personality of the character C on the basis of answers input by the user has been described in this exemplary embodiment, it is not limited thereto.
For example, the communication unit 120 of the mobile terminal 100-1 accesses the server device 200, and the display unit 130 displays a questionnaire form stored in the server device 200. If the questionnaire form is displayed, the input unit 110 performs inputs of answers of the questionnaire form. If the input unit 110 receives the inputs of the answers, the communication unit 120 transmits the answers of the inputs received by the input unit 110 to the server device 200. On the basis of the answers received from the mobile terminal 100-1, the server device 200 determines the personality of the character C. If the server device 200 determines the personality of the character C, it transmits information indicating the determined personality to the mobile terminal 100-1. Thereby, the mobile terminal 100-1 can acquire the personality of the character C.

Although the case when, in step S6 described above, the mobile terminal 100-1 generates a questionnaire form, receives answers of the questionnaire form from the other mobile terminals 100-2 to 100-N, and the mobile terminal 100-1 decides a personality of a character C on the basis of the received answers when a process in which input of attribute information is performed by the other mobile terminals 100-2 to 100-N and the character C is generated in the mobile terminal 100-1 is performed has been described in this exemplary embodiment, it is not limited thereto.
For example, the mobile terminal 100-1 transmits a URL indicating the questionnaire form stored in the server device 200 to the other mobile terminal 100-2. The other mobile terminal 100-2 accesses the server device 200 via the communication unit 120 on the basis of the URL received from the mobile terminal 100-1 and inputs answers of the questionnaire form stored in the server device 200. If the other mobile terminal 100-2 completely inputs the answers, the server device 200 decides the personality of the character C on the basis of the answers of the other mobile terminal 100-2. If the personality of the character C is decided, the server device 200 transmits information indicating the decided personality to the mobile terminal 100-1. Thereby, the mobile terminal 100-1 can acquire the personality of the character C on the basis of the answers of the mobile terminal 100-2.

The above-described mobile terminals 100-1 to 100-N internally have a computer system. An operation of each processing unit described above is stored in a computer readable recording medium in the form of a program and the above-described process is executed by causing a computer to read the program. Here, the computer readable recording medium is a magnetic disk, a magneto-optical disc, a CD-ROM, a DVD-ROM, a semiconductor memory, or the like. The computer program may be distributed to the computer by a communication line, and the computer receiving the distribution may execute the program.

The above-described program may implement part of the above-described function.
The above-described program may be a differential file (differential program) capable of implementing the above-described function in combination with a program already recorded on the computer system.

This application is based upon and claims the benefit of priority from Japanese patent application No. 2009-035422, filed on February 18, 2009, the disclosure of which is incorporated herein in its entirety by reference.

### INDUSTRIAL APPLICABILITY

The present invention can be applied to a moving-subject control device, a moving-subject control system, a moving-subject control method, and a program. According to the moving-subject control device, the moving-subject control system, the moving-subject control method, and the program to which the present invention is applied, it is possible to vary a motion pattern by a moving subject (character) and improve an entertainment property for a user.

### Reference Symbols

- 100-1 to 100-N:: Mobile terminal
- 110:: Input unit
- 120:: Communication unit
- 130:: Display unit
- 140:: Image capturing unit
- 150:: Auxiliary storage unit
- 160:: Main storage unit
- 170:: CPU
- 171:: Generation unit
- 172:: Registration unit
- 173:: Image analysis unit
- 174:: Text analysis unit
- 175:: Standby setting unit
- 176:: Scheduler control unit
- 177:: Mail control unit
- 178:: Motion decision unit
- 200:: Server device
- 210:: Communication unit
- 220:: Control unit
- 230:: Storage unit

## Claims

1. A moving-subject control device which controls a motion of a moving subject based on motion data indicating the motion of the moving subject, comprising:
an input unit which receives an input of attribute information indicating an attribute of the moving subject;
a generation unit which generates motion data for a user based on the attribute information the input of which is received by the input unit, as motion data for controlling a motion of a moving subject for the user generated based on the attribute information input by the user of the moving-subject control device; and
a control unit which varies the motion of the moving subject for the user based on the motion data for the user generated by the generation unit.

2. The moving-subject control device according to claim 1, further comprising:
an attribute information reception unit which receives the attribute information from another device different from the moving-subject control device, wherein:
the generation unit generates motion data for another user based on the attribute information received by the attribute information reception unit, as motion data for controlling a motion of a moving subject for the other user generated based on the attribute information input by the other user who is a user of the other device; and
the control unit varies the motion of the moving subject for the other user based on the motion data for the other user generated by the generation unit.

3. The moving-subject control device according to claim 1, further comprising:
a motion data reception unit which receives motion data for another user as motion data for controlling a motion of a moving subject for the other user generated based on attribute information input by the other user who is a user of another device, the attribute information transmitted from the other device different from the moving-subject device,
wherein the control unit varies the motion of the moving subject for the other user based on the motion data for the other user received by the motion data reception unit.

4. The moving-subject control device according to claim 3, further comprising:
a motion designation information reception unit which receives motion designation information designating the motion of the moving subject for the other user from the other device,
wherein the control unit causes the moving subject for the other user to act based on the motion designation information received by the motion designation information reception unit.

5. The moving-subject control device according to any one of claims 1 to 4, wherein:
the motion data includes emotional information indicating an emotion of the moving subject indicated by the motion data; and
the control unit varies the motion of the moving subject in correspondence with the emotional information.

6. The moving-subject control device according to claim 5, further comprising:
an electronic document reception unit which receives an electronic document from the other device;
an electronic document analysis unit which analyzes content of the electronic document received by the electronic document reception unit; and
an emotion decision unit which decides emotional information included in the motion data for the other user based on the content of the electronic document analyzed by the electronic document analysis unit.

7. The moving-subject control device according to any one of claims 1 to 4, wherein:
the motion data includes an intimacy between the moving subject indicated by the motion data and another moving subject; and
the control unit varies the motion of the moving subject in correspondence with the intimacy included in the motion data.

8. The moving-subject control device according to claim 7, further comprising:
an electronic document reception unit which receives an electronic document from the other device;
an electronic document analysis unit which analyzes content of the electronic document received by the electronic document reception unit; and
an intimacy decision unit which decides an intimacy included in the motion data for the other user based on the content of the electronic document analyzed by the electronic document analysis unit and the intimacy at a point in time when the electronic document is received.

9. The moving-subject control device according to any one of claims 1 to 8, further comprising:
a text generation unit which creates text based on the motion data; and
an electronic document transmission unit which transmits the text generated by the text generation unit as an electronic document.

10. The moving-subject control device according to any one of claims 1 to 9, wherein the attribute information of the moving subject is input at an initial start time of the moving-subject control device.

11. The moving-subject control device according to any one of claims 1 to 10, further comprising:
a standby display unit which displays the moving subject on a standby screen.

12. The moving-subject control device according to any one of claims 1 to 11, further comprising:
a schedule registration unit which associates and registers a schedule and the motion data,
wherein the control unit varies the motion of the moving subject based on content of the schedule and the motion data.

13. A moving-subject control system comprising a moving-subject control device which controls a motion of a moving subject based on motion data indicating the motion of the motion subject, and a server device which retains motion data for controlling the motion of the moving subject,
the moving-subject control device comprising:
an input unit which receives an input of attribute information indicating an attribute of the moving subject;
a generation unit which generates motion data for controlling the motion of the moving subject generated based on the attribute information the input of which is received by the input unit;
an identification information generation unit which generates motion data identification information unique to the motion data generated by the generation unit;
a registration unit which registers the motion data identification information generated by the identification information generation unit in a storage unit;
a device-side transmission unit which transmits the motion data generated by the generation unit and the motion data identification information generated by the identification information generation unit to the server device;
a device-side reception unit which receives the motion data indicated by the motion data identification information stored in the storage unit from the server device; and
a control unit which varies the motion of the moving subject based on the motion data received by the device-side reception unit, and
the server device comprising:
a server-side reception unit which receives the motion data and the motion data identification information from the moving-subject control device;
a server-side registration unit which associates and registers the received motion data identification information and the received motion data in a server-side storage unit; and
a server-side transmission unit which acquires motion data corresponding to the motion data identification information from the server-side storage unit and transmits the motion data to the moving-subject control device.

14. The moving-subject control system according to claim 13, wherein:
the moving-subject control device further comprises a change unit which changes the motion data; and
the device-side transmission unit of the moving-subject control device transmits the motion data changed by the change unit and the motion data identification information generated by the identification information generation unit to the server device.

15. The moving-subject control system according to claim 13 or 14, wherein:
the server device further comprises a motion pattern storage unit which associates and stores the motion data and a motion pattern of the moving subject;
the server-side transmission unit of the server device transmits the motion pattern corresponding to the motion data in addition to the motion data to the moving-subject control device;
the device-side reception unit of the moving-subject control device receives the motion pattern in addition to the motion data; and
the control unit of the moving-subject control device decides the motion of the moving subject based on the motion pattern received by the device-side reception unit.

16. A moving-subject control method using a moving-subject control device controlling a motion of a moving subject based on motion data indicating the motion of the motion subject, the method comprising:
receiving an input of attribute information indicating an attribute of the moving subject;
generating motion data for a user based on the attribute information of the received input, as motion data for controlling a motion of a moving subject for the user being a moving subject, which is generated based on the attribute information input by the user of the moving-subject control device; and
varying the motion of the moving subject for the user based on the generated motion data for the user.

17. A program for causing a moving-subject control device which controls a motion of a moving subject based on motion data indicating the motion of the motion subject, to operate as:
an input unit which receives an input of attribute information indicating an attribute of the moving subject;
a generation unit which generates, based on the attribute information the input of which is received by the input unit, motion data for a user being motion data for controlling a motion of a moving subject for the user indicating a moving subject generated based on the attribute information input by the user of the moving-subject control device; and
a control unit which varies the motion of the moving subject for the user based on the motion data for the user generated by the generation unit.

18. A moving-subject control device communicating with another device which retains motion data for controlling a motion of a moving subject, and causing the moving subject to act, comprising:
a motion data reception unit which receives the motion data from the other device; and
a control unit which varies the motion of the moving subject based on the motion data received by the motion data reception unit.

19. A program for causing a moving-subject control device communicating with another device which retains motion data for controlling a motion of a moving subject, and causing the moving subject to act, to operate as:
a motion data reception unit which receives the motion data from the other device; and
a control unit which varies the motion of the moving subject based on the motion data received by the motion data reception unit.
